# EUROPEAN PATENT SPECIFICATION

(11) **EP 1 432 211 B1**
(45) Date of publication and mention of the grant of the patent: **28.11.2007**
(21) Application number: 03300247.8
(22) Date of filing: 09.12.2003
(51) Int. Cl.: H04L 29/06, H04L 29/08

(54) **Efficient non-user data transmission method**
Verfahren zur effizienten Übertragung von Nichtbenutzerdaten
Procédé efficace de transmission de non-utilisateur de données

(30) Priority: 12.12.2002 US 316946
(43) Date of publication of application: 23.06.2004
(73) Proprietor: Alcatel Canada Inc., Kanata, Ontario K2K 2E6 (CA)
(72) Inventor: Friesen, Larry, Nepean, Ontario K2G 6P2 (CA); Johnson, Robert John, Ottawa, Ontario K2H 6Y5 (CA); Sterne, Jason, Ottawa, Ontario K2G 5N3 (CA); Schriel, James Michael, Nepean, Ontario K2C 3H2 (CA); Pike, Dion, Dunrobin, Ontario K0A 1T0 (CA)
(74) Representative: Korakis-Ménager, Sophie

(56) References cited:
- US-A- 6 094 683
- US-A- 6 118 785

## Description

This invention relates to an improved method of transmitting non-user data from a "packet over SONET" (known as POS) port via a SPI 4.2 interface to a network processor on a POS card. The SPI 4.2 protocol is defined as both "Implementation Agreement OIF-SPI4-02.0" by the Optical Internetworking Forum and "POS-PHY Level 4" by Saturn Group.

High speed data transmission, such as POS, requires an interface between the physical layer and the link layer. The SPI 4.2 protocol is a system packet interface created by the Optical Internetworking Forum (OIF).

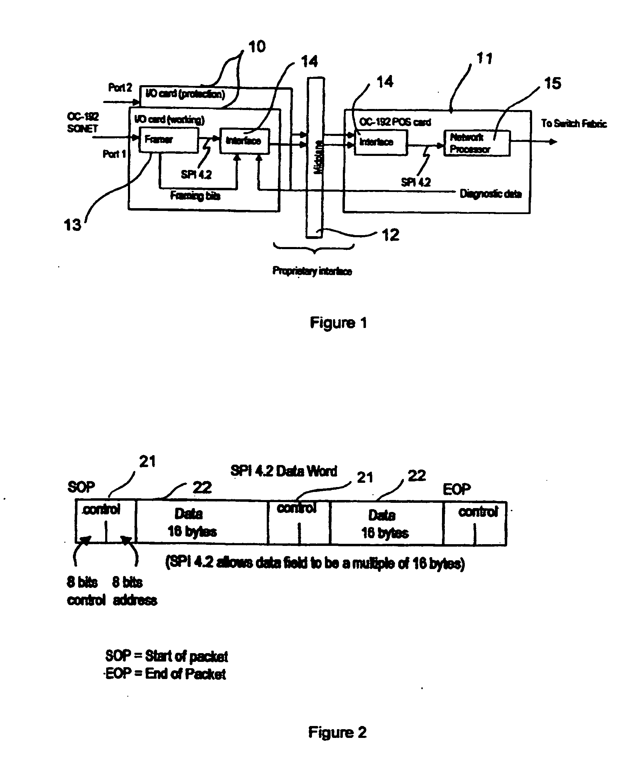

In the prior art system shown in Fig. 1, a pair of OC-192 I/O cards 10 in a 1+1 protection configuration are coupled to an OC-192 POS card 11 via a midplane 12 in a switching system. Each I/O card has a framer 13 for receiving an OC-192 SONET signal and translating the data received in the signal into data words defined by the SPI 4.2 interface protocol. The data words go through the midplane, which is supported by proprietary custom interface ICs 14 on the I/O cards and the POS card. From the POS card, the network processor 15 receives the SPI 4.2 formatted data words, processes them and forwards the processed data words to a switching fabric of a switching system.

As is shown in Figure 1, the SPI 4.2 interface must incorporate non-user data, such as framing bits from the framer and diagnostic data from the POS card, into the data path of SPI 4.2 data word traffic flowing to the POS card, without adversely affecting the bandwidth granularity. The SPI 4.2 protocol does not specifically provide a means of transmitting this non-user data in the data path. One way of doing this has been to assign the non-user data to a "virtual" port and operate in multi-PHY (Physical device) mode which uses an address field as a port indicator. However, not only does this contradict the architecture of the system since it has only one PHY device per port, but the finest bandwidth granularity that can be achieved with this method is insufficient for OC-192 transmission standards. Since the data streams are assumed to be a combination of low bandwidth and high bandwidth streams, to achieve bandwidth granularity the low bandwidth streams must receive high priority treatment under the assumption that they are rate limited.

One object of the present invention is to provide a method for transmission of data between first and second devices over a system constrained by a protocol established for data word traffic including the provision for address bits such as a method of transmitting non-user data from a "packet over SONET" (known as POS) port via a SPI 4.2 interface to a network processor on a POS card, said method allowing an improved bandwidth granularity.

More precisely, the present invention provides a method for transmission of data between first and second devices over a system constrained by a protocol established for data word traffic including the provision for address bits, comprising the steps of:
- operating the protocol with a single physical device,
- determining to which data type, of a predetermined group of data types, the data portion belongs,
- inserting a control word having an indication of the data type prior to the data portion, and
- transmitting the data portions and the control words from the first device, which includes a switching fabric, to the second device, which includes a network processor.

The invention provides a means of transmitting non-user data over a SPI 4.2 interface at any bandwidth granularity. During single PHY mode, the transmission occurs between single ports, eliminating the need for a port address in the control word portion of the SPI 4.2 data word. The address bits of the control word portion of a SPI 4.2 data word are set to indicate the type of data being transmitted during single PHY mode. Since non-user data is transmitted periodically, the bandwidth granularity is improved by using bandwidth only when required for the non-user data as opposed to dedicating bandwidth to the non-user data. The bandwidth granularity is reduced to remain within the specifications for any type of SPI 4.2 packet, including OC-192.
- Fig. 1: is a block diagram of a prior art data transmission system using POS cards and the SPI 4.2 protocol,
- Fig. 2: shows the format of the SPI 4.2 data word

US 6094683 discloses a technique for bundling links for increasing bandwidth and reducing latency. Two nodes in a network are configured to bundle two or more links connected between the two nodes. Data is transmitted between the two nodes by striping data over each link of the bundle. Data is transmitted in cells, and one or more cells are transmitted over each link of the bundle. The cells transmitted on one or more of the links include routing information.

US 6118785 discloses a communication protocol designed for managing the communication between peers, such as the point-to-point protocol, including a signalling channel in frames formatted according to the communication protocol. The signalling channel is utilized by intermediate devices in the access provider network, such as central office switches or other concentration points in the network to facilitate the management of the flow of data traffic in the access provider network. The signalling channel is identified in the intermediate devices and in the end stations, such as customer premises equipment or remote access servers, by a particular value in the Protocol field of the PPP encapsulation format for example. The intermediate device is configured to monitor the protocol field, and when the particular value is recognized, to process the frame at the intermediate device. Likewise, the end station is configured to recognize the particular value in the protocol field, and to process the packet received according to the signalling channel function specified by that particular value.

Referring to Fig. 2, the SPI 4.2 protocol provides for a data word format with data portions 22 that are multiples of 16 bytes in length bracketed on either end by control word portions 21 having 8-bit address and control fields. The SPI 4.2 protocol can be used in single PHY (Physical device) or multi-PHY mode. In single PHY mode the address field is not used for bandwidth allocation. When used in multi-PHY mode with a multi-port interface, the address field is used for denoting to which port the data word belongs. The finest bandwidth granularity that can be obtained by the multi-PHY mode is 1/256 or 0.4% of the line rate since the control word portion has a maximum of 8 address bits. However, the bandwidth granularity required for the OC-192 POS application is smaller, being less than 0.1% of the line rate.

Even if the SPI 4.2 interface was operated in the multi-PHY mode, contrary to the architecture of the system since it has only one PHY device per port, the bandwidth granularity would not be sufficient for non-user data.

This invention relates to a modification made to the address field in the control word portion of the SPI 4.2 data word when operating in single PHY mode. Specifically, the address field is used to identify the type of data within the data portion of the SPI 4.2 data word. This allows non-user data of the POS application to be carried in-band with an arbitrarily small amount of bandwidth granularity. With respect to the POS application, the address field can be used to indicate any one of the following types of data:
a) 10 Gbps user data
b) SONET DCC from port 1
c) SONET DCC from port 2
d) diagnostics from I/O card 1
e) diagnostics from I/O card 2
The data types of b) to e) represent non-user data that is sent as required, indicating there is no bandwidth pre-assigned to these types as with the ports of the multi-PHY mode. Consequently the bandwidth granularity possible for non-user data can be arbitrarily small.

Thus, an improved method of transmitting the non-user data of a POS application has been disclosed while operating within the limits set by the SPI 4.2 protocol.

## Claims

1. Method for transmission of user and non-user data over an interface (14) established between a physical layer device (10) and a data link layer device (11), wherein said interface (14) maps said data into data words with a preset number of data portions (22), each preceded by a control portion (21), wherein said physical layer device (10) has a single port, comprising the steps of:
- receiving a data word over said single port,
- determining to which data type, of a predetermined group of data types, data to be inserted in each data portion (22) of said data word belongs,
- inserting in said control portion a control word having an indication of the data type in said data portion (22) and inserting in said data portion (22) following said control portion (21) any of user and non-user data, and
- transmitting the data word from the physical layer device (10) to the data link layer device (11) over said interface (14).

2. Method according to claim 1 wherein said interface (14) uses the SPI 4.2 protocol.

3. Method according to claim 1 or claim 2 wherein the control word is inserted in the address field of said control portion.

4. Method according to any one of claims 1 to 3 wherein said non-user data includes framing bits necessary for formatting said data word.

5. Method according to any one of claims 1 to 4 wherein the non-user data includes one of control, diagnostic and maintenance data.

6. Method according to any one of claims 1 to 5 further comprising determining the type of data in the data portion of the data word at said data link layer device (11), identifying the non-user data from user data and processing the data portions accordingly.

7. Method according to any one of claims 1 to 6, wherein said physical layer device (10) includes a framer (13) that provides to said interface (14) non-user data for formatting said data word.

8. Method according to any one of claims 1 to 7, wherein said data link layer device (11) includes a network processor (15) for processing said data word and providing the processed data words to a switching system.

## Patentansprüche

1. Verfahren zur Übertragung von Benutzer- und Nichtbenutzerdaten über eine Schnittstelle (14) zwischen einer Vorrichtung der physikalischen Schicht (10) und einer Vorrichtung der Datenverbindungsschicht (11), wobei die genannte Schnittstelle (14) die gennanten Daten Datenworten mit einer vordefinierten Anzahl an Datenanteilen (22) zuordnet, denen jeweils ein Steueranteil (21) vorangeht, wobei die genannte Vorrichtung der physikalischen Schicht (10) einen einzelnen Anschluss aufweist, das die folgenden Schritte umfasst:
- Empfang eines Datenworts über den genannten einzelnen Anschluss,
- Ermittlung, zu welchem Datentyp aus einer vordefinierten Gruppe von Datentypen die Daten gehören, die in den jeweiligen Datenanteil (22) der genannten Datenworte eingefügt werden sollen,
- Einfügen des genannten Steueranteils in ein Sreuerwort, das die Angabe des Datentyps im genannten Datenanteil (22) beinhaltet, und Einfügen von beliebigen Benutzer- und Nichtbenutzerdaten in den genannten Datenanteil (22), der auf den genannten Steueranteil (21) folgt, und
- Übertragung des Datenworts von der Vorrichtung der physikalischen Schicht (10) über die genannte Schnittstelle (14) an die Vorrichtung der Datenverbindungsschicht (11).

2. Verfahren gemäß Anspruch 1, wobei die genannte Schnittstelle (14) das SPI 4.2-Protokoll verwendet.

3. Verfahren gemäß Anspruch 1 oder Anspruch 2, wobei das Steuerwort in das Adressfeld des genannten Steueranteils eingefügt wird.

4. Verfahren gemäß einem der Ansprüch 1 bis 3, wobei die genannten Nichtbenutzerdaten die zur Formatierung das genannten Datenworts erforderlichen Framing Bits beinhalten.

5. Verfahren gemäß einem der Ansprüche 1 bis 4, wobei die Nichtbenutzerdaten Steuer-, Diagnose- oder Wartungsdaten beinhalten.

6. Verfahren gemäß einem der Ansprüche 1 bis 5, das außerdem die Ermittlung des Datentyps im Datenanteil des Datenworts in der genannten Vorrichtung der Datenverbindungsschicht (11) umfasst, wodurch die Nichtbenutzerdaten von den Benutzerdaten unterschieden und die Datenanteils entsprechend verarbeitet werden.

7. Verfahren gemäß einem der Ansprüche 1 bis 6, wobei die genannte Vorrichtung der physikalischen Schicht (10) einen Framer (13) umfasst, der der genannten Schnittstelle (14) Nichtbenutzerdaten zur Formatierung des genannten Datenworts liefert.

8. Verfahren gemäß einem der Ansprüche 1 bis 7, wobei die genannte Vorrichtung der Datenverbindungsschicht (11) einen Netzwerk-Prozessor (15) zur Verarbeitung des genannten Danteworts und zur Übermittlung der verarbeiteten Datenworte an ein Vermittlungssystem umfasst.

## Revendications

1. Procédé pour la transmissson de données d'utilisateur et de non-utilisateur sur une interface (14) établie entre un dispositif de couche physique (10) et un dispositif de couche de liaison de données (11), dans lequel ladite interface (14) met en corrélation lesdites données pour des mots de données avec un nombre prédéfini de parties de données (22), chacune précédée par une partie de commande. (21), dans lequel ledit dispositif de couche physique (10) a un port unique, comprenant les étapes consistant à :
recevoir un mot de données sur ledit port unique,
déterminer à quel type de données, parmi un groupe prédéterminé de types de données, appartiennent des données à insérer dans chaque partie de données (22) dudit mot de données,
- insérer dans ladite partie de commande un mot de commande ayant une indication du type de données dans ladite partie de données (22) et insérer dans ladite partie de données (22) suivant ladite partie de commande (21) l'une quelconque des données d'utilisateur et de non-utitisateur, et
- transmettre le mot de données du dispositif de couche physique (10) au dispositif de couche de liaison de données (11) sur ladite interface (14).

2. Procédé selon la revendication 1 dans lequel ladite interface (14) utilise le protocole SPI 4.2.

3. Procédé selon la revendication 1 ou la revendication 2 dans lequel le mot de commande est inséré dans le champ d'adresse de ladite partie de commande.

4. Procèdé selon l'une quelconque des revendications 1 à 3 dans lequel lesdites données de non-utilisateur comprennent des bits de verrouillage de trame nécessaires pour formater ledit mot de données.

5. Procédé selon l'une quelconque des revendications 1 à 4 dans lequel les données de non-utilisateur comprennent des données de commande de diagnostic ou de maintenance.

6. Procédé selon l'une quelconque des revendications 1 à 5 comprenant en outre la détermination du type de données dans la partie de données du mot de données au niveau dudit dispositif de couche de liaison se données (11), l'identification des données de non-utilisateur à partir des données d'utilisateur et le traitement des parties de données en conséquence.

7. Procédé selon l'une quelconque des revendications 1 à 6, dans lequel ledit dispositif de couche physique (10) comprend un verrouilleur de trame (13) qui fournit à ladite interface (14) des données de non-utilisateur pour formater ledit mot de données.

8. Procédé selon l'une quelconque des revendications 1 à 7, dans lequel ledit dispositif de couche de liaison de données (11) comprend un processeur de réseau (15) pour traiter ledit mot de données et fournir les mots de données traités à un système de commutation.
